## Europäisches Patentamt
## European Patent Office
## Office européen des brevets

(19)

(11) Veröffentlichungsnummer: **0 062 191**
**B1**

(12) # EUROPÄISCHE PATENTSCHRIFT

(45) Veröffentlichungstag der Patentschrift:
02.09.87

(51) Int. Cl.⁴: **G 01 B 11/00**, G 01 D 5/26

(21) Anmeldenummer: **82102205.0**

(22) Anmeldetag: **18.03.82**

(54) **Verfahren und Anordnung zur Messung des Ortes oder der Bewegung eines Körpers.**

(30) Priorität: 26.03.81 DE 3112026

(43) Veröffentlichungstag der Anmeldung:
13.10.82 Patentblatt 82/41

(45) Bekanntmachung des Hinweises auf die Patenterteilung:
02.09.87 Patentblatt 87/36

(84) Benannte Vertragsstaaten:
AT BE CH FR GB IT LI NL SE

(56) Entgegenhaltungen:
DE-A-2 718 807
FR-A-1 590 632
FR-A-2 314 474

(73) Patentinhaber: FRAUNHOFER- GESELLSCHAFT ZUR FÖRDERUNG DER ANGEWANDTEN FORSCHUNG E.V., Leonrodstrasse 54, D-8000 München 19 (DE)

(72) Erfinder: Kugler, Hans- Peter, Dipl.- Ing., Siedlerstrasse 34, D-7519 Zaisenhausen (DE)
Erfinder: Eisenreich, Norbert, Dr. Dipl.- Phys., Amselstrasse 16, D-7507 Pfinztal 1 (DE)
Erfinder: Liehmann, Wolfgang, Dipl.- Phys., Ziegeleistrasse 5, D-7500 Karlsruhe 41 (DE)

(74) Vertreter: Dr.- Ing. Hans Lichti Dipl.- Ing. Heiner Lichti Dipl.- Phys. Dr. Jost Lempert, Postfach 41 07 60 Durlacher Strasse 31, D-7500 Karlsruhe 41 (DE)

EP 0 062 191 B1

LIBER, STOCKHOLM 1987

## Beschreibung

Die Erfindung betrifft ein Verfahren sowie eine Vorrichtung zur Messung der relativen Lage oder Bewegung eines schwingenden Körpers.

Es sind eine Reihe von Verfahren und Vorrichtungen zur Messung eines Ortes oder einer Bewegung eines Körpers bekannt. Hierzu gehören neben rein mechanischen Verfahren und Vorrichtungen auch Verfahren und zugehörige Vorrichtungen zur Messung elektrischer Größen, wie Messung mittels Spannungsteilern und Drehpotentiometern, kapazitiver und induktiver Wegmessungen z. B. mittels Tauchankergebern oder elektromagnetischer Impulsgeber. Diese Verfahren und Vorrichtungen weisen Nachteile derart auf, daß sie zum Teil nicht rückwirkungsfrei sind, also die Bewegung oder den Ort des zu untersuchenden Körpers beeinflussen und daher die Meßergebnisse verfälschen. Auch sind derartige Meßeinrichtungen empfindlich gegen störende Fremdeinflüsse. Weiterhin sind diese Verfahren und Anordnungen hinsichtlich ihres Meßbereiches Einschränkungen unterworfen und erfordern teilweise aufwendige Apparaturen zur Auswertung der erhaltenen Meßergebnisse.

Der Erfindung liegt demgegenüber die Aufgabe zugrunde, ein Verfahren und eine Vorrichtung zur Untersuchung der Relativbewegung eines schwingenden Körpers zu einem anderen anzugeben, daß bzw. die einfach ausgestaltet sind, keinen hohen konstruktiven Aufwand erfordern und ein einfaches Vorgehen ermöglichen, dennoch aber von störenden Fremdeinflüssen frei sind und eine hohe Auflösung gewährleisten.

Erfindungsgemäß wird die genannte Aufgabe mittels eines Verfahrens gelöst, das dadurch gekennzeichnet ist, daß ein Meßstrahl und ein Referenzstrahl mindestens eines Lasers mit endlicher Aufweitung über eine Meßkante des schwingenden Körpers und über eine Referenzkante, relativ zu der der Körper schwingt, geführt wird, wobei die Strahlen teilweise durch die Kanten abgedeckt sind; und daß die Intensität der Strahlen jeweils mittels eines Detektors gemessen und miteinander verglichen werden.

Eine erfindungsgemäße Vorrichtung sieht zur Lösung der Aufgabe vor, daß der schwingende Körper mit einer Meßkante und ein starres Teil mit einer Referenzkante auf einem Schwingerreger angeordnet sind, so daß die Meßkante sich relativ zur Referenzkante bewegen kann; daß mindestens ein Laser vorgesehen ist, mittels dem oder denen ein Meß- und ein Referenzstrahl erzeugt werden; daß der Meßstrahl über die Meßkante und der Referenzstrahl über die Referenzkante geführt werden; und daß Detektoren im Weg des Meßstrahls und des Referenzstrahls angeordnet sind.

Es ist bekannt mittels eines Meß- und Referenzstrahls die Dicke von durchlaufenden Fäden oder Drähten zu messen (DE-A-27 18 807, FR-A-15 90 632). Es ist weiter die Untersuchungen der Form eines durchlaufenden Gegenstandes mittels eines Lasers bekannt (FR-A-23 14 474).

Gemäß bevorzugter Ausgestaltung ist vorgesehen, daß Meß- und Referenzstrahl durch Aufspaltung des Strahls eines Lasers erzeugt werden bzw. daß nur ein Laser vorgesehen ist und daß zur Aufspaltung des Strahles des Lasers in zueinander parallele Meß- und Referenzstrahlen im Strahlengang des Laserstrahls ein halbdurchlässiger und ein Umlenkspiegel angeordnet sind.

Gegenüber bekannten gattungsgemäßen Verfahren und Vorrichtungen zur Untersuchung schwingender Körper wird erfindungsgemäß eine berührungslose Erfassung der relativen Lage und Bewegung des Körpers und ein Vergleich derselben vorgenommen. Insbesondere aufgrund des erfindungsgemäßen Einsatzes eines Lasers ist die Durchführung der Erfindung völlig unabhängig von störendem Fremdlicht. Messungen können ohne Abdunklung und bei Tageslicht ohne Filter vorgenommen werden. Die Erfindung nutzt dabei, daß die Intensitätsverteilung eines Laserstrahles über seinen Durchmesser hin bekannt ist und daß bei teilweiser Abschirmung eines Laserstrahls von beispielsweise 5 mm die Intensität einerseits des über die abschirmende Kante gestrahlten Anteils des Strahles und andererseits des bei einer mit einer reflektierenden Fläche versehenen Kante reflektierten Strahlanteiles vom Ort der Kante im Strahl abhängig ist. Die Geometrie des Strahles kann durch Linsen und durch eine oder mehrere Blenden im Strahlengang jeweils in geeigneter Weise angepaßt werden. Bei der Erfindung kommt es also darauf an, daß zunächst eine Relativbewegung zwischen Meßanordnung aus Laser und Detektor und einem Strahlteil, dem Meßstrahl befindlichen Kante gegeben ist. Der Referenzstrahl wird über eine relativ zur Meßanordnung in Ruhe befindlichen Kante geführt. Sinnvollerweise wird der Meßstrahl über die Kante eines sich "bewegenden" Körpers bzw. eine mit einem solchen Körper verbundene Kante geführt, während die Meßanordnung und die Referenzkante in Ruhe ist. Die Ausgestaltung kann aber auch umgekehrt gewählt werden. Als Detektoren kommen geeignete Fotoempfänger, wie Fotodioden, Sekundärelektronenvervielfacher, Fototransistoren u. dgl. in Frage. Das übliche Meßverfahren wird derart erfolgen, daß die Intensität des nicht durch die Kanten abgedeckten Teiles der Strahlen hinter diesem gemessen wird; wie aber schon angedeutet wurde, ist es auch möglich derart vorzugehen, daß die Kanten mit reflektierenden Flächen versehen und die reflektierenden Flächen im Strahlengang angeordnet sind und die Intensität der reflektierten Anteile der Strahlen im Detektor gemessen wird. Zum Vergleich der beiden von den beiden Strahlen in den Detektoren erzeugten Meßsignale ist als Vergleichseinrichtung in bevorzugter Ausgestaltung ein Kathodenstrahloszillograph vorgesehen, auf dem die Phase und die Amplituden im Verlgeich dargestellt werden. Hierzu werden die Ausgänge der Detektoren jeweils an den X- bzw. Y-Eingang eines solchen Kathodenstrahloszillographen angelegt. Bei einer Schwingungsbewegung eines Körpers ergibt sich dann je nach Phasenbeziehung eine Gerade oder eine Ellipse auf dem Oszillographenschirm, wobei die Gerade bzw. eine Halbachse der Ellipse je nach den Intensitätsverhältnissen von Meß- und Referenzstrahlen geneigt erscheint. Vorzugsweise ist eine Abgleich- oder Eicheinrichtung vorgesehen, mittels der die Detektoren zur Weiterverarbeitung der Signale derart aufeinander abgeglichen werden, daß bei identischen Meßgrößen, also identischem Intensitätseinfall beide ein gleiches Meßsignal ergeben. In diesem Falle liegt dann die Gerade auf dem Oszillographenschirm unter einem Winkel von 45°.

Zur einfachen Messung der Relativbewegung der zu vergleichenden Körper kann eine Subtraktion der beiden Signale, beispielsweise in bevorzugter Ausgestaltung dadurch vorgenommen werden, daß zur Subtraktion der beiden Signale der Detektoren ein Differenzverstärker vorgesehen ist.

Vorteile der Erfindung liegen weiterhin darin, daß eine extrem hohe Auflösung bis in den Submikrometerbereich bei Aufweitungsmöglichkeiten des zur Messung verwendeten Strahles bis zu einigen Zentimetern erreichbar ist. Der Frequenzgang ist nach oben hin lediglich durch die Grenzfrequenz der Detektoren beschränkt. Mittels des erfindungsgemäß vorgeschlagenen Zweistrahlverfahrens werden Umwelteinflüsse vollständig beseitigt.

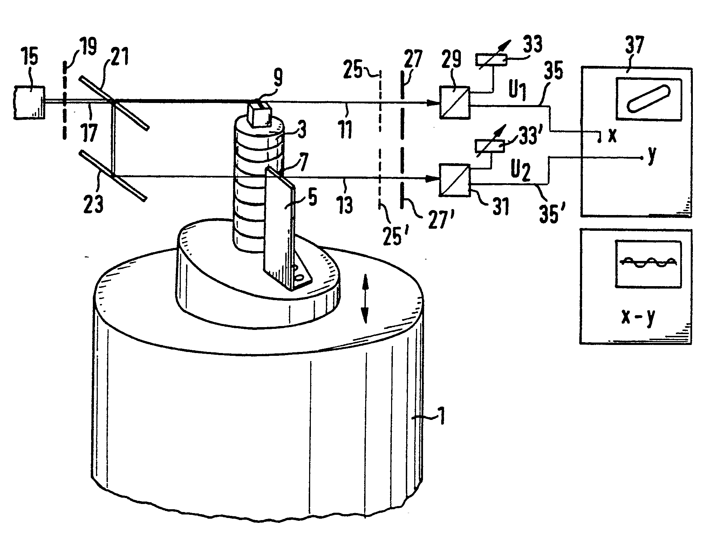

An der nachfolgenden Beschreibung, ist ein Ausführungsbeispiel der Erfindung anhand der Zeichnung im einzelnen erläutert. Dabei zeigt die einzige

Figur:

eine Ausführungsform der erfindungsgemäßen Anordnung zur Durchführung des erfindungsgemäßen Verfahrens.

Auf einem Schwingerreger 1 sind gemeinsam und parallel zueinander ein schwingungsfähiges System 3 und ein relativ starres Teil 5 mit einer Referenzkante 7 angeordnet. Über eine obere Kante 9 am System und die Referenzkante 7 wird jeweils ein Meß- bzw. Referenzstrahl 11, 13 geführt.

Zur Erzeugung der Strahlen 11, 13 ist ein Laser 15 vorgesehen, dessen Strahl 17 gegebenenfalls durch eine Abbildungsoptik 19, dann aber in jedem Fall zu einem halbdurchlässigen Spiegel 21 gelenkt ist. Im dargestellten Ausführungsbeispiel ist der durch den halbdurchlässigen Spiegel 21 tretende Anteil des Laserstrahles 17 der Meßstrahl 11. Der vom halbdurchlässigen Spiegel 21 reflektierte Teil des Strahles 17 wird von einem Vollspiegel 23 derart umgelenkt, daß er als Referenzstrahl 13 parallel zum Meßstrahl 11 und über die Kante 7 geleitet wird. Beide Strahlen 11, 13 treten gegebenenfalls durch weitere Abbildungsoptiken 25, 25' und/oder Blenden 27, 27' in Detektoren 29, 31 ein, mittels derer die Intensität der Strahlen 11, 13 zu jedem Zeitpunkt gemessen und in eine elektrische Größe umgewandelt wird. Mit den Detektoren 29, 31 sind Abstimmeinrichtungen 33, 33' verbunden, um in Ruhelage die Detektoren aufeinander abzustimmen bzw. zu eichen, so daß sie in Ruhelage das gleiche Ausgangssignal liefern. Die Ausgänge 35, 35' der Detektoren 29, 31 werden an den X- bzw. Y-Eingag eines Kathodenstrahloszillograps 37 angelegt, mittels dessen dann die erzwungenen Schwingungen des schwingungsfähigen Systems 3 relativ zu der Bewegung des Schwingungserregers 1 gemessen werden können. Durch Differenzbildung der Ausgangssignale der Detektoren 29, 31 wie es rechts unten in der Figur dargestellt ist, können die Relativauslenkungen des schwingungsfähigen Systems unmittelbar dargestellt werden.

Als Detektoren 29, 31 kommen beispielsweise Fotodioden, Sekundärelektronenvervielfacher und Fototransistoren in Frage. Zur Verarbeitung und Wiedergabe der erhaltenen Ausgangssignale der Detektoren können auch andere Vorrichtungen als der Kathodenstrahloszillograph 37 eingesetzt werden, beispielsweise Schreiber od. dgl.. Die Daten können auch gespeichert werden.

**Patentansprüche**

1. Verfahren zur Messung der relativen Lage oder Bewegung eines schwingenden Körpers, dadurch gekennzeichnet, daß ein Meßstrahl und ein Referenzstrahl mindestens eines Lasers mit endlicher Aufweitung über eine Meßkante des schwingenden Körpers und über eine Referenzkante, relativ zu der der Körper schwingt, geführt werden, wobei die Strahlen teilweise durch die Kanten abgedeckt sind; und daß die Intensität der Strahlen jeweils mittels eines Detektors gemessen und miteinander verglichen werden.

2. Verfahren nach Anspruch 1, dadurch gekennzeichnet, daß Meß- und Referenzstrahl durch Aufspaltung des Strahls eines Lasers erzeugt werden.

3. Verfahren nach Anspruch 2, dadurch gekennzeichnet, daß der Meß- und der Referenzstrahl mittels eines halbdurchlässigen Spiegels erzeugt werden.

4. Verfahren nach einem der vorangehenden Ansprüche, dadurch gekennzeichnet, daß die Intensität des nicht durch die Kanten abgedeckten Teiles der Strahlen hinter diesen gemessen wird.

5. Verfahren nach einem der Ansprüche 1 bis 3,

dadurch gekennzeichnet, daß die Kanten mit reflektierenden Flächen versehen werden die reflektierenden Flächen im Strahlengang angeordnet werden, und daß die Intensität der reflektierten Anteile der Strahlen im Detektor gemessen wird.

6. Vorrichtung zur Messung der relativen Lage oder Bewegung eines schwingenden Körpers (3), dadurch gekennzeichnet, daß der schwingende Körper (3) mit einer Meßkante (9) und ein starres Teil (5) mit einer Referenzkante (7) auf einem Schwingerreger angeordnet sind, so daß die Meßkante (9) sich relativ zur Referenzkante bewegen kann; daß mindestens ein Laser (15) vorgesehen ist, mittels dem oder denen ein Meß- und ein Referenzstrahl (11, 13) erzeugt werden; daß der Meßstrahl (11) über die Meßkante (9) und der Referenzstrahl (13) über die Referenzkante (7) geführt werden; und daß Detektoren (29, 31) im Weg des Meßstrahls (11) und des Referenzstrahls (13) angeordnet sind.

7. Vorrichtung nach Anspruch 6, dadurch gekennzeichnet, daß nur ein Laser (15) vorgesehen ist und daß zur Aufspaltung des Strahles (17) des Lasers (15) in zueinander parallele Meß- und Referenzstrahlen (11, 13) im Strahlengang des Laserstrahls (17) ein halbdurchlässiger und ein Umlenkspiegel (21, 23) angeordnet sind.

8. Vorrichtung nach Anspruch 6 oder 7, dadurch gekennzeichnet, daß die Detektoren (29, 31) gemeinsam mit einer Vergleichseinrichtung (37) verbunden sind.

9. Vorrichtung nach Anspruch 8, dadurch gekennzeichnet, daß die Vergleichseinrichtung ein Kathodenstrahloszillograph (37) ist.

10. Vorrichtung nach einem der Ansprüche 6 bis 8, dadurch gekennzeichnet, daß zur Subtraktion der beiden Signale (35, 35') der Detektoren (29, 31) ein Differenzverstärker vorgesehen ist.

## Claims

1. Method for measuring the relative position or movement of an oscillating body, characterized in that a measuring beam and a reference beam of at least one laser with a finite expansion are guided over a measuring edge of the oscillating body and over a reference edge relative to which the body oscillates, the beams being partly covered by the edges and that the intensity of the beams are measured by means of a detector and compared with one another.

2. Method according to claim 1, characterized in that the measuring and reference beams are produced by splitting the beam of a laser.

3. Method according to claim 2, characterized in that the measuring and reference beam are produced by means of a semireflecting mirror.

4. Method according to one of the preceding claims, characterized in that the intensity of the part of the beams not covered by the edges is measured behind the same.

5. Method according to one of the claims 1 to 3, characterized in that the edges are provided with reflecting faces, the reflecting faces are located in the optical path and the intensity of the reflected portions of the beam are measured in the detector.

6. Apparatus for measuring the relative position or movement of an oscillating body (3), characterized in that the oscillating body (3) with a measuring edge (9) and a rigid part (5) having a reference edge (7) are arranged on an oscillator, so that measuring edge (9) can move relative to the reference edge, that at least one laser (15) is provided, by means of which a measuring and a reference beam (11, 13) are produced, that the measuring beam (11) is guided over the measuring edge (8) and the reference beam (13) over the reference edge (7) and that detectors (29, 31) are arranged in the path of the measuring beam (11) and the reference beam (13).

7. Apparatus according to claim 6, characterized in that only one laser (15) is provided and that for splitting the beam (17) of laser (15) into measuring and reference beams (11, 13) parallel to one another, a semireflecting and a reflecting mirror (21, 23) are arranged in the optical path of laser beam (17).

8. Apparatus according to claims 6 or 7, characterized in that detectors (29, 31) are jointly connected to a reference device (37).

9. Apparatus according to claim 8, characterized in that the reference device is a cathode ray oscilloscope (37).

10. Apparatus according to one of the claims 6 to 8, characterized in that a differential amplifier is provided for subtracting the two signals (35, 35') of detectors (29, 31).

## Revendications

1. Procédé pour la mesure de la position ou du mouvement relatif d'un corps oscillant, caractérisé en ce qu'un faisceau de mesure et un faisceau de référence d'au moins un laser à ouverture finie peuvent être dirigés sur une arête de mesure du corps oscillant et sur une arête de référence par rapport à laquelle le corps oscille, les faisceaux étant masqués en partie par les arêtes; et que les intensités des faisceaux sont mesurées respectivement au moyen d'un détecteur et comparées l'une avec l'autre.

2. Procédé selon la revendication 1, caractérisé en ce que les faisceaux de mesure et de référence sont produits par dédoublement du faisceau d'un laser.

3. Procédé selon la revendication 2, caractérisé en ce que les faisceaux de mesure et de référence sont produits à l'aide d'un miroir semi-transparent.

4. Procédé selon l'une quelconque des revendications 1 à 3, caractérisé en ce que l'intensité de la partie des faisceaux non masquée par les arêtes est mesurée en aval de ces dernières.

5. Procédé selon l'une quelconque des revendications 1 à 3, caractérisé en ce que les arêtes sont pourvues de surfaces réfléchissantes, que les surfaces réfléchissantes sont insérées dans la marche des rayons, et que l'intensité des parties réfléchies des faisceaux est mesurée dans le détecteur.

6. Dispositif pour la mesure de la position ou du mouvement relatif d'un corps oscillant (3), caractérisé en ce que le corps oscillant (3) avec une arête de mesure (9) et un élément immobile (5) avec une arête de référence (7) sont installés sur un oscillateur de telle façon que l'arête de mesure (9) peut se déplacer par rapport à l'arête de référence; qu'il est prévu au moins un laser (15) pour l'émission d'un faisceau de mesure et d'un faisceau de référence (11, 13); que le faisceau de mesure (11) passe sur l'arête de mesure (5) et le faisceau de référence (13) sur l'arête de référence (7); et que des détecteurs (29, 31) sont intercalés dans la trajectoire du faisceau de mesure (11) et du faisceau de référence (13).

7. Dispositif selon la revendication 6, caractérisé en ce qu'il ne comprend qu'un seul laser (15) et que, pour le dédoublement du faisceau (17) du laser (15) en faisceaux de mesure et de référence (11, 13) parallèles l'un à l'autre, un miroir semi-transparent et un miroir de déviation (21, 23) sont placés dans la trajectoire du faisceau laser (17).

8. Dispositif selon l'une des revendications 6 ou 7, caractérisé en ce que les détecteurs (29, 31) sont reliés ensemble à un dipositif de comparaison (37).

9. Dispositif selon la revendication 8, caractérisé en ce que le dispositif de comparaison est un oscillographe cathodique (37).

10. Dispositif selon l'une quelconque des revendications 6 à 8, caractérisé en ce qu'un amplificateur différentiel est prévu pour la soustraction des deux signaux (35, 35') des détecteurs (29, 31).